**Europäisches Patentamt**

**European Patent Office**

**Office européen des brevets**

(19)

(11) Veröffentlichungsnummer: **0 316 262 B1**

# EUROPÄISCHE PATENTSCHRIFT

(12)

(45) Veröffentlichungstag der Patentschrift:
**30.10.91 Patentblatt 91/44**

(51) Int. Cl.⁵: **B60J 1/20, E06B 9/68,**
**F16H 33/00, E04H 4/00**

(21) Anmeldenummer: **88730240.4**

(22) Anmeldetag: **28.10.88**

(54) Vorrichtung zum Verschieben eines Betätigungsorgans.

(30) Priorität: **05.11.87 DE 3737853**

(43) Veröffentlichungstag der Anmeldung:
**17.05.89 Patentblatt 89/20**

(45) Bekanntmachung des Hinweises auf die
Patenterteilung:
**30.10.91 Patentblatt 91/44**

(84) Benannte Vertragsstaaten:
**CH DE FR GB IT LI**

(56) Entgegenhaltungen:
**DE-A- 2 358 755**
**DE-A- 2 945 991**
**DE-B- 1 236 164**

(56) Entgegenhaltungen:
**FR-A- 2 577 264**
**US-A- 1 697 087**
**PATENT ABSTRACTS OF JAPAN, Band 1, Nr.**
**87 (M-30), 13. August 1977; & JP-A-52 29 569**
**(HITACHI SEISAKUSHO K.K.) 05-03-1977**

(73) Patentinhaber: **SIEMENS**
**AKTIENGESELLSCHAFT**
**Wittelsbacherplatz 2**
**W-8000 München 2 (DE)**

(72) Erfinder: **Seidel, Uwe**
**Treptower Strasse 94**
**W-1000 Berlin 44 (DE)**
Erfinder: **Wendt, Joachim, Ing. grad.**
**Wittekindstrasse 60**
**W-1000 Berlin 42 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Verschieben eines Verschiebeelementes, das mit einem dem freien Ende entgegengesetzten Ende an einer dem Auf- und Abrollen dienenden Rolle mit einem Ende eines Bandes derart befestigt ist, daß das Band auf der von der Rolle abgewandten Seite liegt und daß das Band mit dem freien Ende auf einer zweiten Rolle auf- und abwickelbar ist.

Bei einer bekannten Vorrichtung dieser Art (DE-AS-1236164) zum Abdecken von Flüssigkeit enthaltenen Becken, insbesondere von Schwimmbecken, besteht das Verschiebeelement aus einer Abdeckung, die auf eine Rolle (Walze) auf- und abgewickelt werden kann. Ein parallel mit der Abdeckung auf- und abzuwickelndes Band wird darüber hinaus noch einer zweiten Rolle zugeführt, die mit ihrem Antrieb die Abdeckung von der Rolle abgerollt und über das Becken schiebt. Zum Einrollen der Abdeckung wird der Antrieb umgeschaltet und die Rolle entgegen der Ablaufrichtung angetrieben. Dadurch wird das Band von der nun im Freilauf zu betriebenden zweiten Rolle wieder abgewickelt.

Die der Erfindung zugrundeliegende Aufgabe besteht darin, eine Vorrichtung zum Verschieben eines Verschiebeelementes zu definieren, bei dem verschiebungsrichtungsabhängige Umsteuerungsvorgänge nicht auftreten und darüber hinaus die Schubkräfte über die eigentlichen Reibungsverluste der Rollenmechanismen hinaus wesentlich gesteigert sind.

Erfindungsgemäß wird dies dadurch erreicht, daß das Verschiebeelement durch ein erstes schubsteifes Federband realisiert ist, das an dem freien Ende mit einem Betätigungsorgan verbunden ist, daß das Band durch ein weiteres schubsteifes Federband gebildet ist, und daß das Betätigungsorgan durch einen, zumindest auf die zweite Rolle einwirkenden Antriebsmotor in zwei zueinander entgegengesetzte Richtungen verfahrbar ist.

Ein wesentlicher Vorteil der erfindungsgemäßen Vorrichtung besteht darin, daß infolge der Verwendung eines Federbandes relativ große Schubkräfte aufgebracht werden können, ohne daß ein Ausbeulen auftritt.

Darüber hinaus ist noch von besonderem Vorteil, daß das Verschiebeelement mit einem außerhalb des Auf- und Abrollmechanismus angeordneten Betätigungsorgan in Verbindung steht. Dadurch sind die Schubkräfte, die vom gradlinig geformten Verschiebeelement auf das Betätigungsorgan ausgeübt sind, zusätzlich verstärkt.

Die für die Überwindung der Reibungsverluste des Verschiebeelementes notwendigen Kräfte sind infolge der Verwendung eines weiteren Federbandes zusätzlich noch verringert, da durch dieses zweite Federband Reibungskräfte zwischen den einzelnen Windungen des aufgewickelten einen Federbandes weitestgehend vermieden sind ; das eine Federband wird gewissermaßen mittels des weiteren Federbandes unter dessen Aufwickeln auf eine zweite Rolle von der einen Rolle abgewickelt. Dies kann deshalb mit einem verhältnismäßig leistungsarmen Antriebsmotor geschehen. Die erforderliche Schubkraft ist im wesentlichen nur durch das Gewicht des mit dem Betätigungsorgan zu verschiebenden Bauteils bzw. dessen Reibung auf der Unterlage bestimmt.

Die erfindungsgemäße Vorrichtung braucht hinsichtlich ihres Antriebsmotors nur mit der zweiten Rolle verbunden zu sein, sofern auf der einen Rolle beispielsweise in Form einer gespannten Feder eine Rückholanordnung für das Wiederaufwickeln des einen Federbandes gemeinsam mit dem weiteren Federband vorhanden ist. Als besonders vorteilhaft wird es jedoch angesehen, wenn bei der erfindungsgemäßen Vorrichtung der Antriebsmotor über ein Zahnradgetriebe mit beiden Rollen derart verbunden ist, daß die Rollen in gleicher Drehrichtung angetrieben werden. Es wird dann jeweils mittels des einen Federbandes unter dessen Aufwickeln auf die jeweils eine Rolle das jeweils andere Federband von der jeweils anderen Rolle abgewickelt. Der Antrieb des Betätigungsorgans in zwei zueinander entgegengesetzte Richtungen erfolgt hier lediglich durch entsprechenden Wechsel der Drehrichtung des Antriebsmotors.

Zur Erläuterung der Erfindung ist in

Figur 1     eine Seitenansicht eines Ausführungsbeispiels der erfindungsgemäßen Vorrichtung mit abgenommener Seitenplatte, in

Figur 2     ein Schnitt durch dasselbe Ausführungsbeispiel entlang der Linie II-II und in

Figur 3     ein Ausschnitt aus der Figur I mit übermäßig stark dargestellten Federbändern wiedergegeben.

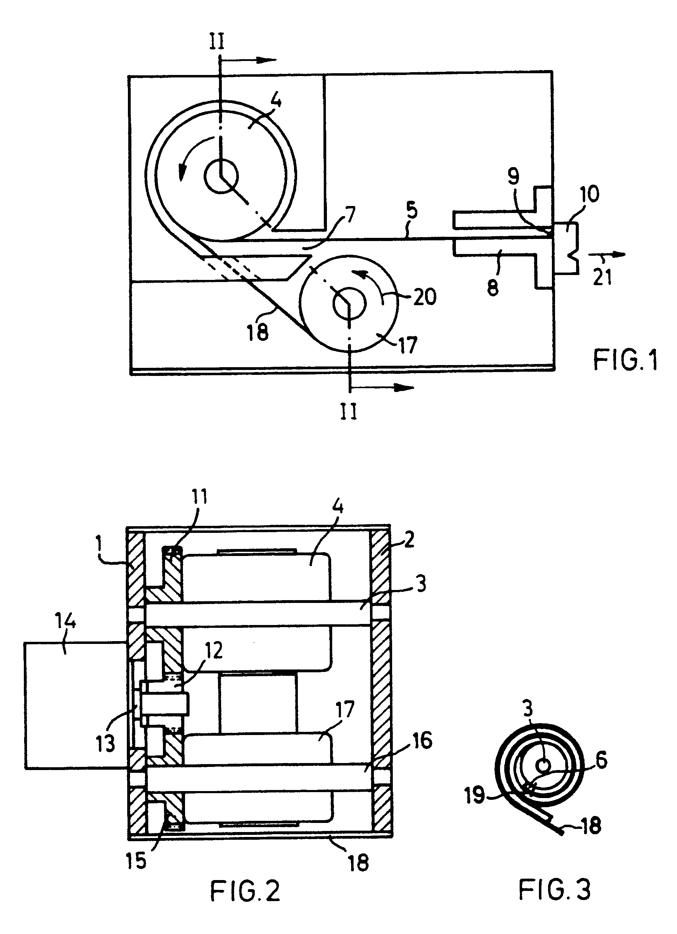

Das dargestellte Ausführungsbeispiel enthält eine Seitenwand 1 und eine weitere Seitenwand 2, in denen an beiden Enden eine Welle 3 einer Rolle 4 gelagert ist. Auf der Rolle 4 befindet sich — wie dies andeutungsweise aus der Figur 1 hervorgeht — ein Federband 5, das mit seinem einen Ende 6 (vgl. Figur 3) an der Rolle 4 befestigt ist.

Das eine Federband 5 wird über einen Rollenaustritt 7 und durch einen Führungsschlitz 8 geführt, dessen begrenzende Bauteile gleichzeitig einen Anschlag für ein am Ende 9 des einen Federbandes 5 befestigtes Betätigungsorgan 10 darstellen.

Zum Antrieb der Rolle 4 dient ein Zahnrad 11, das fest auf der Welle 3 befestigt ist. Dieses Zahnrad 11 steht im Eingriff mit einem weiteren Zahnrad 12, das auf einer Welle 13 eines Antriebsmotors 14 gehalten ist. Von dem Zahnrad 12 wird ein weiteres Zahnrad 15 angetrieben, das auf einer Welle 16 einer weiteren Rolle 17 sitzt. Die Welle 16 der weiteren Rolle 17 ist beidseitig ebenfalls in den Seitenwänden 1 und 2 gelagert.

Auf der weiteren Rolle 17 befindet sich ein weiteres Federband 18. Dieses Federband ist mit seinem einen Ende 19 — wie insbesondere Figur 3 zeigt — an der Rolle 4 befestigt ; mit seinem anderen Ende ist das weitere Federband 18 an der weiteren Rolle 17 befestigt. Dabei befindet sich das weitere Federband 18 mit seinem einen Ende 19 auf der von der Rolle 4 abgewandten Seite, umfaßt also das eine Federband 5 außen.

Wird die Welle 3 in Richtung des in der Figur 3 gezeigten Pfeiles angetrieben, dann wird nicht nur das eine Federband 5, sondern gleichzeitig auch das weitere Federband 18 auf der weiteren Rolle 4 aufgewickelt, wie dies in der Figur 3 für einige gemeinsame Windungen der beiden Federbänder 5 und 18 gezeigt ist. Dabei wird gleichzeitig das Betätigungsorgan 10 zurückgezogen, wobei dieser Vorgang solange abläuft, bis das Betätigungsorgan 10 gegen den von den den Führungsschlitz 8 begrenzenden Bauteilen gebildeten Anschlag geführt ist.

Soll ein in den Figuren nicht gezeigter Gegenstand mittels des Betätigungsorgans 10 verschoben werden, dann wird die weitere Rolle 17 in Richtung des in Figur 1 gezeigten Pfeiles 20 angetrieben, wobei das weitere Federband 18 auf die weitere Rolle 17 aufläuft, während gleichzeitig das eine Federband 5 von der einen Rolle 4 abläuft und dabei das Betätigungsorgan 10 und den nicht gezeigten Gegenstand in Richtung des Pfeiles 21 verschiebt. Dabei ist durch das weitere Federband 18 dafür gesorgt, daß die innere Spannung des einen Federbandes 5 zu nicht zu großen Reibungskräften zwischen den einzelnen Windungen des einen Federbandes 5 führt, weil das Abwickeln des einen Federbandes 5 von der Rolle 4 stets mittels des außen um die jeweils äußere Windung des einen Federbandes 5 verlaufenden weiteren Federbandes 18 erfolgt.

Damit ist eine Vorrichtung geschaffen, mit der sich ohne aufwendige Antriebsmotoren und mit einer einfachen Führung auch verhältnismäßig große Bauteile verschieben lassen, weil das Federband eine verhältnismäßig große Stabilität hat und nicht leicht zum Ausbeulen neigt.

Mit der erfindungsgemäßen Vorrichtung lassen sich nicht nur Gegenstände fortschieben, sondern bei entsprechender Gestaltung des Betätigungsorgans auch heranziehen.

**Patentansprüche**

1. Vorrichtung zum Verschieben eines Verschiebeelementes (5), das mit einem dem freien Ende entgegengesetzten Ende (6) an einer dem Auf- und Abrollen dienenden Rolle (4) mit einem Ende eines Bandes (18) derart befestigt ist, daß das Band (18) auf der von der Rolle (4) abgewandten Seite liegt und daß das Band (18) mit dem freien Ende (19) auf einer zweiten Rolle (17) auf- und abwickelbar ist, **dadurch gekennzeichnet,** daß das Verschiebeelement durch ein erstes schubsteifes Federband (5) realisiert ist, das an dem freien Ende (9) mit einem Betätigungsorgan (10) verbunden ist, daß das Band durch ein weiteres schubsteifes Federband (18) gebildet ist, und daß das Betätigungsorgan (10) durch einen, zumindest auf die zweite Rolle (17) einwirkenden Antriebsmotor (14) in zwei zueinander entgegengesetzte Richtungen verfahrbar ist.

2. Vorrichtung nach Anspruch 1, **dadurch gekennzeichnet,** daß der Antriebsmotor (14) über ein Zahnradgetriebe (11, 12, 15) mit beiden Rollen (4, 17) derart verbunden ist, daß die Rollen (4, 17) in gleicher Drehrichtung angetrieben werden.

**Claims**

1. A device for displacing a slide element (5), which is secured, with its one end (6) opposing the free end, on a roller (4) serving to roll up and unwind, with one end of a band (18), in such a way that the band (18) lies on the side facing away from the roller (4) and is able to be wound and unwound with the free end (19) on a second roller (17), characterised in that the slide element is realised by a first shear resistant spring band (5), which is connected at its free end (9) to an actuating element (10), in that the band is formed by a further shear resistant spring band (18), and in that the actuating element (10) is able to be driven by a drive motor (14) acting at least on the second roller (17) in two opposing directions.

2. A device according to claim 1, characterised in that the drive motor (14) is connected by way of a toothed gearing (11, 12, 15) to both rollers (4, 17) such that the rollers (4, 17), are driven in the same rotary direction.

**Revendications**

1. Dispositif pour déplacer un élément coulissant (5), qui est fixé, par une extrémité (6) située à l'opposé de son extrémité libre, sur un rouleau (4) utilisé pour l'enroulement et le déroulement, à une extrémité d'une bande (18) de manière que cette dernière s'applique sur la face tournée à l'opposé du rouleau (4) et peut être enroulée, par son extrémité libre (19), sur un second rouleau (17) et en être déroulée, caractérisé par le fait que l'élément coulissant est formé par un premier ressort en forme de bande (5) résistant au cisaillement, qui est raccordé, au niveau de son extrémité libre (9), à un organe d'actionnement (10), que la bande est formée par un autre ressort en forme de bande (18), résistant au cisaillement et que l'organe d'actionnement (10) peut être déplacé dans deux directions opposées par un moteur d'entraînement (14) agissant au moins sur le second rouleau (17).

2. Dispositif suivant la revendication 1, caractérisé par le fait que le moteur d'entraînement (14) est raccordé, par l'intermédiaire d'une transmission à engrenages (11, 12, 15), aux deux rouleaux (4, 17) de telle sorte que ces derniers sont entraînés dans le même sens de rotation.

FIG.1

FIG.2

FIG.3